# EUROPÄISCHE PATENTANMELDUNG

(11) **EP 4 554 248 A1**
(43) Veröffentlichungstag der Anmeldung: **14.05.2025**
(21) Anmeldenummer: 24210788.6
(22) Anmeldetag: 05.11.2024
(51) Int. Cl.: H04N 23/66

(54) **KAMERAKOMPONENTE**

(30) Priorität: 10.11.2023 DE 102023131319
(71) Anmelder: Arnold & Richter Cine Technik GmbH & Co. Betriebs KG, 80807 München (DE)
(72) Erfinder: PREYMANN, Leonard, 2100 Korneuburg (AT)
(74) Vertreter: Manitz Finsterwald Patent- und Rechtsanwaltspartnerschaft mbB

(57) **Zusammenfassung**

Eine Kamerakomponente weist eine Kommunikationseinrichtung zum Übertragen von Steuer- und/oder Statussignalen auf, die eine Steuereinheit und wenigstens einen elektrischen Anschluss umfasst, wobei der elektrische Anschluss wenigstens zwei Energieversorgungskontakte und wenigstens zwei Signalkontakte aufweist, und wobei die Steuereinheit dazu ausgebildet ist, die folgenden Schritte auszuführen, wenn die Kommunikationseinrichtung über den elektrischen Anschluss mit einer weiteren Kommunikationseinrichtung einer weiteren Kamerakomponente verbunden wird:
- Durchführen einer ersten Prüfung, ob mit der weiteren Kommunikationseinrichtung eine Kommunikation gemäß einem ersten Protokoll möglich ist,
- danach Durchführen einer zweiten Prüfung, ob mit der weiteren Kommunikationseinrichtung auch eine Kommunikation gemäß einem zweiten Protokoll möglich ist, und
- im Falle eines positiven Ergebnisses der zweiten Prüfung Aufbauen einer Kommunikation mit der weiteren Kommunikationseinrichtung gemäß dem zweiten Protokoll.

## Beschreibung

Die Erfindung betrifft eine Kamerakomponente, die durch eine Bewegtbildkamera oder ein Zubehörgerät für eine Bewegtbildkamera gebildet ist, mit einer Kommunikationseinrichtung zum Übertragen von Steuer- und/oder Statussignalen der Kamerakomponente, wobei die Kommunikationseinrichtung eine Steuereinheit und wenigstens einen elektrischen Anschluss umfasst, wobei der elektrische Anschluss wenigstens zwei Energieversorgungskontakte und wenigstens zwei Signalkontakte aufweist.

Bewegtbildkameras werden beispielsweise bei der Produktion von Kino-, Fernseh- und Streamingdienst-Filmen verwendet, wobei häufig elektronische Bewegtbildkameras zum Einsatz kommen. Eine elektronische Bewegtbildkamera umfasst üblicherweise ein integriertes optisches System (Kameraobjektiv) oder einen Objektivanschluss, um wahlweise ein jeweiliges, an bestimmte Aufnahmesituationen angepasstes Wechselobjektiv anschließen zu können. Um die mittels des optischen Systems erfassten Bilder aufzeichnen zu können, sind meist ein elektronischer Bildsensor zum Erzeugen von Bildsignalen aus einfallendem Licht und eine Bildsignalverarbeitungseinrichtung zum Umwandeln der Bildsignale in einen digitalen Bilddatenstrom vorgesehen.

Eine Fernsteuereinrichtung kann dabei vorgesehen sein, um eine elektronische Bewegtbildkamera (insbesondere Videokamera) oder auch eine herkömmliche Bewegtbildkamera (insbesondere Filmkamera) zum Aufnehmen von Bewegtbildsequenzen anzusteuern und/oder Aufnahmeparameter einstellen bzw. während einer Aufnahme verändern zu können. Ein die Bewegtbildkamera führender Kameramann muss dadurch lediglich die korrekte und sich gegebenenfalls verändernde Ausrichtung der Kamera zur Aufnahme eines gewünschten Bildausschnitts sicherstellen, während die korrespondierende Einstellung der Aufnahmeparameter von einer weiteren Person, einem Kameraassistenten oder einem Schärfezieher, übernommen werden kann. Beispielsweise kann es vorgesehen sein, die Bildaufnahmefrequenz, die Verschlusszeit, die Irisblendenöffnung, die Fokuslage bzw. die Schärfe oder die Brennweite (Zoom-Faktor) des Kameraobjektivs ferngesteuert und insbesondere in einer zuvor zwischen dem Kameramann und dem Benutzer der Fernsteuereinrichtung abgesprochenen Abfolge während einer Aufnahme anzupassen.

Die Einstellung von Parametern der Kamera, insbesondere der Irisblendenöffnung, der Fokuslage und der Brennweite, kann über jeweilige Objektiv-Stellmotoren erfolgen, die in das Kameraobjektiv integriert oder als separate, externe Einheiten außerhalb des Kameraobjektivs angeordnet sein können. Ein solcher Objektiv-Stellmotor kann mit einem drehbaren Objektivring des Kameraobjektivs verbunden sein, so dass der betreffende Parameter durch Drehen des Objektivrings mittels des Objektiv-Stellmotors verändert werden kann. Eine ferngesteuerte Einstellung der Aufnahmeparameter kann somit durch die Übermittlung von Stellsignalen an den jeweiligen Objektiv-Stellmotor mittels einer Fernsteuereinrichtung erfolgen, um den zugeordneten Objektivring in eine gewünschte Drehstellung zu überführen. Eine solche Fernsteuereinrichtung ist beispielsweise aus DE 196 29 484 A1 und WO 2010/046237 A1 bekannt. Ferner zeigt beispielsweise DE 42 19 331 A1 eine Fernsteuereinrichtung zum Einstellen unterschiedlicher Aufnahmeparameter vor und insbesondere während einer Bewegtbildaufnahme durch Ansteuern jeweiliger Objektiv-Stellmotoren.

Die genannten Stellmotoren bilden Zubehörgeräte für die betreffende Bewegtbildkamera. Auch eine Fernsteuereinrichtung, die zum Beispiel per Kabel mit der Bewegtbildkamera oder einem weiteren Zubehörgerät verbunden ist, kann ihrerseits ein Zubehörgerät für eine Bewegtbildkamera bilden. Ebenso ist beispielsweise ein Stellmotor für einen Kamerahalter, insbesondere für einen motorisierten Antrieb der Kamera in Schwenkrichtung ("pan") und/oder Neigerichtung ("tilt"), wie dies aus US 5963749 A bekannt ist, ein mögliches Zubehörgerät der Bewegtbildkamera.

Bei den von der vorstehend genannten Kommunikationseinrichtung zu übertragenden Signalen kann es sich beispielsweise um Steuersignale für die Kamerakomponente (z.B. Soll-Werte für einen Stellmotor) und/oder um Statussignale der Kamerakomponente (z.B. Ist-Werte eines Stellmotors oder eines Positionssensors eines Kameraobjektivs) handeln.

Eine Übertragung von Steuer- und/oder Statussignalen kann also zwischen unterschiedlichen Kamerakomponenten erfolgen, welche mit jeweiligen, zueinander passenden Kommunikationseinrichtungen versehen sind. Die Kommunikation kann gemäß einem Kommunikationsprotokoll erfolgen. Ein verbreitetes Kommunikationsprotokoll ist das Controller Area Network (CAN) Protokoll, das in vielerlei Varianten und Weiterentwicklungen spezifiziert ist, insbesondere gemäß der Norm ISO 11898. Eine Kommunikation gemäß einem Kommunikationsprotokoll, insbesondere dem CAN-Protokoll, ermöglicht den Aufbau eines seriellen Bussystems zur Signalübertragung zwischen mehreren Kamerakomponenten.

Ein Vorteil eines seriellen Bussystems, insbesondere eines CAN-Buses, besteht darin, dass der Verkabelungsaufwand nur relativ gering ist und dass Nachrichtenkollisionen vermieden werden. Fehlererkennungsmechanismen wie Bitstuffing, Frame Check und Cyclic Redundancy Check ermöglichen ein hohes Maß an Robustheit und Sicherheit. Jedes Gerät im Bussystem kann selbständig mit den anderen Busteilnehmern kommunizieren. Weiterhin ist es von Vorteil, dass ein derartiges Bussystem leicht um weitere Busteilnehmer erweiterbar ist. Insbesondere können die Busteilnehmer "Plug and Play"-fähig sein, so dass umständliche Installations- und Einstellungsvorgänge entfallen. Die Energieversorgungskontakte ermöglichen es, dass auch die Energieversorgung der Kamerakomponenten über die Kommunikationseinrichtungen erfolgt.

Anwender wünschen sich immer leistungsfähigere und flexiblere Kamerakomponenten, was hinsichtlich der Kommunikation häufig mit höheren Datenraten einhergeht. Beispielsweise werden hohe Datenraten bei Fokus-Stellmotoren immer wichtiger, um bei hoher Stellgeschwindigkeit eine ausreichend hohe Auflösung zu gewährleisten. Die üblicherweise verwendeten Bussysteme, insbesondere die verbreiteten CAN-Bussysteme, sind aber nicht für hohe Übertragungsfrequenzen ausgelegt.

Um höhere Datenraten zu ermöglichen, könnte grundsätzlich eine Umstellung auf ein besonders breitbandiges Protokoll vorgenommen werden. Dies würde jedoch bestehende Kamerakomponenten beispielsweise mit CAN-basierten Kommunikationseinrichtungen von der weiteren Verwendung ausschließen. Ein Anwender müsste also einen gesamten Satz an vorhandenen Kamerakomponenten auf ein neues Kommunikationssystem umstellen, was mit hohen Anschaffungskosten verbunden wäre.

Es ist eine Aufgabe der Erfindung, unter Vermeidung hoher Anschaffungskosten eine schnellere und flexiblere Kommunikation von Kamerakomponenten zu ermöglichen.

Erfindungsgemäß ist die Steuereinheit der Kommunikationseinrichtung der Kamerakomponente dazu ausgebildet, die folgenden Schritte auszuführen, wenn die Kommunikationseinrichtung über den elektrischen Anschluss oder über einen von mehreren elektrischen Anschlüssen mit einer weiteren Kommunikationseinrichtung einer weiteren Kamerakomponente verbunden wird:
- Durchführen einer ersten Prüfung, ob mit der weiteren Kommunikationseinrichtung eine Kommunikation gemäß einem ersten Protokoll möglich ist;
- danach Durchführen einer zweiten Prüfung, ob mit der weiteren Kommunikationseinrichtung auch eine Kommunikation gemäß einem zweiten Protokoll möglich ist, und
- im Falle eines positiven Ergebnisses der zweiten Prüfung Aufbauen einer Kommunikation mit der weiteren Kommunikationseinrichtung gemäß dem zweiten Protokoll.

Eine erfindungsgemäße Kamerakomponente ist in der Lage, sowohl über ein erstes Protokoll als auch über ein zweites Protokoll zu kommunizieren. Bei dem ersten Protokoll kann es sich um ein weit verbreitetes Protokoll handeln, das jedoch relativ langsam ist. Bei dem zweiten Protokoll kann es sich um im Vergleich zu dem ersten Protokoll relativ schnelles Protokoll handeln. Wenn der Kommunikationspartner fähig ist, auch gemäß dem zweiten Protokoll zu kommunizieren, wird dies im Rahmen der zweiten Prüfung festgestellt. Im Falle eines positiven Ergebnisses der zweiten Prüfung (als notwendige Bedingung oder unmittelbar als hinreichende Bedingung) kann eine Kommunikation mit der weiteren Kommunikationseinrichtung gemäß dem zweiten Protokoll aufgebaut und die weitere Kommunikation über das zweite Protokoll abgewickelt werden. Dies ermöglicht nicht nur eine besonders hohe Bandbreite, beispielsweise 100 MBit/s bei bis zu 15 m Kabellänge im Falle eines SPE-Protokolls, sondern auch die Nutzung von Zusatzfunktionen wie zum Beispiel die Bereitstellung von Metadaten und Zeitstempeln. Aufgrund der ersten Prüfung wird von einer erfindungsgemäßen Kamerakomponente jedoch auch eine verbundene Kamerakomponente erkannt, die ausschließlich über das erste Protokoll kommunizieren kann. Das heißt eine erfindungsgemäße Kamerakomponente ist insofern abwärtskompatibel, als sie sowohl mit modernen Geräten gemäß dem zweiten Protokoll als auch mit älteren Geräten gemäß dem ersten Protokoll kommunizieren kann. Von besonderem Vorteil ist hierbei, dass für die Kommunikation gemäß dem ersten Protokoll und die Kommunikation gemäß dem zweiten Protokoll keine separaten Anschlüsse und Verbindungskabel bereitgestellt werden müssen, weil für beide Protokolle die gemeinsamen Energieversorgungskontakte und Signalkontakte sowie vorhandene (beispielsweise vierpolige) Verbindungskabel genutzt werden können.

Bei der erfindungsgemäßen Kamerakomponente kann es sich um eine Bewegtbildkamera oder um ein Zubehörgerät für eine Bewegtbildkamera handeln. Auch bei der weiteren Kamerakomponente, mit der eine Kommunikation hergestellt werden soll, kann es sich um eine Bewegtbildkamera oder um ein Zubehörgerät für eine Bewegtbildkamera handeln. Das jeweilige Zubehörgerät kann beispielsweise einen (integrierten oder externen) Stellmotor für ein Kameraobjektiv, einen motorisierten optischen Filter (zum Beispiel einen motorisch drehbaren Polarisationsfilter), einen motorisch verstellbaren Kamerahalter (zum Beispiel einen motorisierten Stativkopf mit Antrieb in Schwenkrichtung und/oder Neigerichtung), eine Kamerastabilisierungseinrichtung (zum Beispiel ein motorisch stabilisiertes Gimbal), eine Bildstabilisierungseinrichtung (zum Beispiel eine elektrisch gesteuerte optische Bildstabilisierung einer Bewegtbildkamera oder eines Objektivs), eine Fernsteuereinrichtung (wie vorstehend bereits erläutert) oder eine Filmset-Beleuchtungseinrichtung (zum Beispiel einen steuerbaren Scheinwerfer) umfassen.

Bei dem ersten Protokoll kann es sich insbesondere um ein Controller Area Network (CAN) Protokoll handeln. Dieses Protokoll ist in seinen Varianten und Weiterentwicklungen weit verbreitet, so dass zahlreiche existierende Kamerakomponenten mit der erfindungsgemäßen Kamerakomponente gekoppelt werden können.

Bei dem zweiten Protokoll kann es sich beispielsweise um ein Zeitstempel-übertragungsfähiges Netzwerkprotokoll handeln, insbesondere ein Internet Protocol (IP) Protokoll in seinen verschiedenen Varianten und Weiterentwicklungen. Sofern das zweite Protokoll in der Lage ist, über reine Werte (z.B. Soll-Werte, Ist-Werte, Sensorwerte) auch zugeordnete Zeitdaten zu übertragen, ergeben sich in der modernen Filmtechnik neue Anwendungsmöglichkeiten für bestehende Kamerakomponenten, da dann eine nachträgliche zeitgenaue Verknüpfung von Bilddaten einer verwendeten Bewegtbildkamera mit Aufnahmeparametern (z.B. Fokuslage des Objektivs, Position oder Ausrichtung der Bewegtbildkamera im Raum) möglich ist. Dies ist etwa in der Post Production im Falle einer Virtualisierung der Aufnahmeumgebung wichtig.

Gemäß einer bevorzugten Ausführungsform kann das zweite Protokoll ein Single Pair Ethernet (SPE) Protokoll sein. Ein SPE-Protokoll ist für die Übertragung von Ethernet über ein einzelnes Paar Kupferadern konzipiert. Das SPE-Protokoll kann gemäß der Norm IEEE 802.3, insbesondere gemäß der Norm IEEE 802.3cg (1 0Base-T1), spezifiziert sein. Eine Kommunikation gemäß einem SPE-Protokoll hat den Vorteil, dass im Vergleich zu historisch verbreiteten Protokollen (wie etwa einem CAN-Protokoll) nicht nur eine relativ schnelle Datenübertragung und auch eine Übertragung von Metadaten und Zeitstempeln möglich sind. Sondern die Kommunikation kann über eine geringe Anzahl von elektrisch leitenden Adern erfolgen, insbesondere über lediglich zwei Adern, so dass die historisch verbreiteten Kabel auch für eine Kommunikation gemäß dem SPE-Protokoll verwendet werden können. Insbesondere können hierfür generell die Kabel, Stecker und Buchsen verwendet werden, die auch für eine Kommunikation gemäß dem CAN-Protokoll verwendet werden, wobei allenfalls geringe Anpassungen hinsichtlich der Impedanz erforderlich sind.

In einem Kamerasystem, das eine Bewegtbildkamera und mehrere Zubehörgeräte der Bewegtbildkamera umfasst, kann es auch ausreichend sein, dass die Kommunikationseinrichtung einzelner Kamerakomponenten lediglich einen einzigen elektrischen Anschluss umfasst, während die Kommunikationseinrichtungen anderer Kamerakomponenten jeweils wenigstens zwei elektrische Anschlüsse umfassen. Wenn die Kommunikationseinrichtung einer Kamerakomponente (wie zum Beispiel der Bewegtbildkamera selbst oder eines motorisierten optischen Filters) lediglich einen einzigen elektrischen Anschluss umfasst, kann diese Kamerakomponente insbesondere das letzte Glied in einer seriellen Bus-Anordnung bilden.

Was die Steuereinheit der Kommunikationseinrichtung betrifft, so kann diese dazu ausgebildet sein, das Verbinden der Kommunikationseinrichtung über den jeweiligen elektrischen Anschluss mit einer weiteren Kommunikationseinrichtung einer weiteren Kamerakomponente automatisch zu erkennen, beispielsweise durch Überwachen der Kontakte, wie dies bei "Hot Plugging"-Verfahren grundsätzlich bekannt ist.

Die Steuereinheit kann dazu ausgebildet sein, im Falle eines positiven Ergebnisses der ersten Prüfung zumindest temporär eine Kommunikation mit der weiteren Kommunikationseinrichtung gemäß dem ersten Protokoll (z.B. CAN-Protokoll) aufzubauen. Hierdurch kann temporär, vollständig oder teilweise, ein durch die Kommunikationseinrichtungen gebildetes Bussystem aufgebaut werden. Eine Verständigungsmöglichkeit über das erste Protokoll wird somit unmittelbar genutzt. Die zweite Prüfung kann dann - ebenso wie gegebenenfalls vorzunehmende zusätzliche Prüfungen - unter Nutzung des ersten Protokolls vorgenommen werden. Wenn die andere Kommunikationseinrichtung sowohl über das erste Protokoll als auch über das zweite Protokoll kommunizieren kann, kann die vorhandene Fähigkeit, auch über das zweite Protokoll kommunizieren zu können, über die Verbindung gemäß dem ersten Protokoll mitgeteilt werden. Die Kommunikationseinrichtungen der Kamerakomponente und der weiteren Kamerakomponente können somit unter Nutzung des ersten Protokolls eine nachfolgende Nutzung des zweiten Protokolls aushandeln.

Sofern die Kommunikation zwischen den Kommunikationseinrichtungen gemäß dem ersten Protokoll erfolgt, können die (wenigstens zwei) Signalkontakte des jeweiligen elektrischen Anschlusses für die Übertragung von Signalen und die (wenigstens zwei) Energieversorgungskontakte für die Versorgung der Kommunikationseinrichtung oder der betreffenden Kommunikationseinrichtung mit elektrischer Energie dienen. Entsprechendes gilt, wenn die Kommunikation zwischen den Kommunikationseinrichtungen gemäß dem zweiten Protokoll erfolgt; alternativ hierzu kann im Falle einer Kommunikation gemäß dem zweiten Protokoll eine Energieversorgung über die Signalkontakte des jeweiligen elektrischen Anschlusses erfolgen.

Gemäß einer Ausführungsform der Erfindung ist die Steuereinheit dazu ausgebildet, im Falle eines negativen Ergebnisses der ersten Prüfung die erste Prüfung zu wiederholen. Es kann also abgewartet werden, bis überhaupt eine Kommunikation gemäß dem ersten Protokoll (zum Beispiel eine CAN-basierte Kommunikation) möglich ist, so dass also das erste Protokoll als gesichertes Einstiegsprotokoll dient. Alle Geräte, die zumindest zu einer Kommunikation gemäß dem ersten Protokoll fähig sind, was für viele bestehende Kamerakomponenten zutrifft, können in einem entsprechenden Kamerasystem eingesetzt werden.

Die Steuereinheit kann bei anderen Ausführungsformen dazu ausgebildet sein, im Falle eines negativen Ergebnisses der ersten Prüfung die zweite Prüfung durchzuführen. Bei dieser Ausgestaltung wird also in dem Fall, dass keine Kommunikation gemäß dem ersten Protokoll (zum Beispiel eine CAN-Kommunikation) möglich ist, gewissermaßen "auf gut Glück" eine Kommunikation gemäß dem zweiten Protokoll versucht. Dies ist besonders effizient in Kamera-Anwendungsumgebungen, in welchen hauptsächlich oder ausschließlich entweder auf dem ersten Protokoll basierte oder auf dem zweiten Protokoll basierte Kamerakomponenten verwendet werden.

Bei einigen Ausführungsformen umfasst das Aufbauen einer Kommunikation mit der weiteren Kommunikationseinrichtung gemäß dem zweiten Protokoll, dass die Kommunikationseinrichtung und die weitere Kommunikationseinrichtung eine Master/Slave-Zuordnung aushandeln. Dies erleichtert die Verwaltung von Zugriffen auf den gemeinsamen Übertragungskanal. Unter einer Master/Slave-Zuordnung ist eine definierte Hierarchie zu verstehen, aufgrund derer eine der Kommunikationseinrichtungen ein höherprioritäres Recht hat, Signale zu übertragen.

Bei einigen Ausführungsformen kann die Steuereinheit der Kommunikationseinrichtung wenigstens einen Controller (z.B. Microcontroller), wenigstens einen dem ersten Protokoll entsprechenden ersten Transceiver (z.B. CAN-Transceiver), wenigstens einen dem zweiten Protokoll entsprechenden zweiten Transceiver (z.B. SPE-Transceiver) und wenigstens eine Schalteinrichtung umfassen, wobei die Schalteinrichtung dazu ausgebildet ist, wahlweise den ersten Transceiver oder den zweiten Transceiver mit den (wenigstens zwei) Signalkontakten des (wenigstens einen) elektrischen Anschlusses der Kommunikationseinrichtung zu koppeln, um über diesen elektrischen Anschluss Signale zu übertragen, und wobei der Controller dazu ausgebildet ist, die Kopplung des ersten Transceivers und des zweiten Transceivers mit den Signalkontakten der Kommunikationseinrichtung zu steuern. Somit kann auf einfache und schnelle Weise zwischen dem ersten Transceiver und dem zweiten Transceiver umgeschaltet werden. Unter einem Transceiver ist die Kombination aus einem elektronischen Empfänger und einem elektronischen Sender zu verstehen, insbesondere für eine kabelgebundene Signalübertragung, wobei die Signalüberragung beispielsweise bei einem CAN-Transceiver gemäß einem CAN-Protokoll und bei einem SPE-Transceiver gemäß einem SPE-Protokoll erfolgt. Der erste Transceiver, der zweite Transceiver und der Controller können jeweilige integrierte Schaltkreise aufweisen. Der erste Transceiver und der zweite Transceiver sorgen für eine Umsetzung der Übertragungssignale in logische Signale und verhindern Überspannungen. Die Schalteinrichtung kann einen oder mehrere Transistoren oder ein oder mehrere Relais aufweisen, die mit dem Controller und mit dem elektrischen Anschluss in Verbindung stehen.

Die übertragenen Signale können Signale für den Verbindungsaufbau und die vorstehend genannten Steuer- und/oder Statussignale der Kamerakomponente sowie zugeordnete Metadaten und/oder Zeitstempel umfassen.

Der Controller der Kommunikationseinrichtung kann dazu ausgebildet sein, eine Übertragung von Signalen zwischen mehreren, insbesondere zwei Anschlüssen der Kommunikationseinrichtung zu steuern.

Gemäß einer Ausführungsform der Erfindung kann die Kommunikationseinrichtung der Kamerakomponente zwei elektrische Anschlüsse der genannten Art (also jeweils mit wenigstens zwei Energieversorgungskontakten und wenigstens zwei Signalkontakten) und eine Schnittstelle für eine Signalübertragung zwischen der Kommunikationseinrichtung und einer Komponenten-Funktionssteuereinheit der Kamerakomponente aufweisen. Der genannte Controller der Kommunikationseinrichtung kann bei einer solchen Ausführungsform dazu ausgebildet sein kann, eine Übertragung von Signalen zwischen den zwei Anschlüssen der Kommunikationseinrichtung und/oder zwischen einem der zwei Anschlüsse und der Schnittstelle der Kommunikationseinrichtung zu steuern. Bei der Komponenten-Funktionssteuereinheit kann es sich um eine komponentenspezifische Steuereinheit handeln, welche aufgrund der übertragenen Signale die Funktionsweise der Kamerakomponente steuert. Zum Beispiel kann die Motorsteuerung eines Objektiv-Stellmotors oder die Basis-Steuereinheit einer Kamera eine Komponenten-Funktionssteuereinheit bilden. Die Schnittstelle der Kamerakomponente ermöglicht eine signalmäßige Kopplung der Komponenten-Funktionssteuereinheit der Kamerakomponente mit deren Kommunikationseinrichtung, so dass alle für den Betrieb der Kamerakomponente notwendigen Steuer- und Statussignale an eine oder mehrere verbundene Kamerakomponenten übertragen werden können.

Die Steuereinheit der Kommunikationseinrichtung kann für jeden elektrischen Anschluss (insbesondere für jeden von zwei oder mehr elektrischen Anschlüssen) einen ersten Transceiver (zum Beispiel CAN-Transceiver) und einen zweiten Transceiver (zum Beispiel SPE-Transceiver) aufweisen. Dadurch ist es möglich, über jeden elektrischen Anschluss wahlweise eine Verbindung gemäß dem ersten Protokoll oder eine Verbindung gemäß dem zweiten Protokoll aufzubauen.

Die Steuereinheit kann für jeden von mehreren (beispielsweise zwei) elektrischen Anschlüssen eine jeweilige Schalteinrichtung oder für mehrere (beispielsweise zwei) elektrische Anschlüsse eine gemeinsame Schalteinrichtung aufweisen. Ferner kann die Steuereinheit für jeden von mehreren (beispielsweise zwei) elektrischen Anschlüssen einen jeweiligen Controller oder für mehreren (beispielsweise zwei) elektrische Anschlüsse einen gemeinsamen Controller aufweisen.

Die Kommunikationseinrichtung der Kamerakomponente kann wenigstens einen Signalumsetzer aufweisen. Der Signalumsetzer kann insbesondere Teil des genannten Controllers der Kommunikationseinrichtung der Steuereinheit oder separat hiervon ausgebildet sein. Der Signalumsetzer kann dazu ausgebildet sein, wahlweise ein gemäß dem ersten Protokoll empfangenes Signal (zum Beispiel CAN-Signal) in ein Signal gemäß dem zweiten Protokoll (zum Beispiel SPE-Signal) umzuwandeln oder ein gemäß dem zweiten Protokoll empfangenes Signal (zum Beispiel SPE-Signal) in ein Signal gemäß dem ersten Protokoll (zum Beispiel CAN-Signal) umzuwandeln. Der Controller der Kommunikationseinrichtung kann dazu ausgebildet sein, den Signalumsetzer zu einem Umwandeln eines an einem elektrischen Anschluss gemäß dem ersten Protokoll empfangenen Signals in ein Signal gemäß dem zweiten Protokoll anzusteuern, um das Signal gemäß dem zweiten Protokoll an einem anderen elektrischen Anschluss der Kommunikationseinrichtung auszugeben; und/oder den Signalumsetzer zu einem Umwandeln eines an einem elektrischen Anschluss gemäß dem zweiten Protokoll empfangenen Signals in ein Signal gemäß dem ersten Protokoll anzusteuern, um das Signal gemäß dem ersten Protokoll an einem anderen elektrischen Anschluss der Kommunikationseinrichtung auszugeben. Die Kommunikationseinrichtung der Kamerakomponente kann bei dieser Ausgestaltung eine Adapterfunktion erfüllen. Beispielsweise kann in einer seriellen Kopplung von Kamerakomponenten gemäß dem "Daisy Chain"-Prinzip ein SPE-Signal, das von einer der Kamerakomponenten ausgegeben wird, von der nachfolgenden Kamerakomponente in ein CAN-Signal gewandelt und dann an eine weiter nachfolgende Kamerakomponente ausgegeben werden. Zum Beispiel kann auf diese Weise in einer Reihe von SPE-fähigen Kamerakomponenten eine lediglich CAN-fähige Kamerakomponente mitgeführt werden, wobei vorzugsweise die lediglich CAN-fähige Kamerakomponente an das steuerungsabgewandte Ende der Kette zu setzen ist.

Gemäß einer weiteren Ausführungsform der Erfindung ist die Steuereinheit dazu ausgebildet, nach dem Aufbauen einer Kommunikation mit der weiteren Kommunikationseinrichtung gemäß dem zweiten Protokoll eine Bewertung der Signalübertragungsqualität durchzuführen und im Falle eines negativen Ergebnisses der Bewertung eine Kommunikation mit der weiteren Kommunikationseinrichtung gemäß dem ersten Protokoll anstelle des zweiten Protokolls aufzubauen. Dies trägt dem Umstand Rechnung, dass eine Verbindung gemäß dem ersten Protokoll (zum Beispiel CAN-Verbindung) zwar langsamer, jedoch robuster sein kann als eine Verbindung gemäß dem zweiten Protokoll (zum Beispiel SPE-Verbindung) und insbesondere größere Kabellängen zulässt. Die Bewertung der Signalübertragungsqualität stellt eine Qualitätsprüfung dar, aufgrund derer Situationen erkennbar sind, die für eine Verbindung gemäß dem zweiten Protokoll problematisch sind. Es ist in solchen Situationen, beispielsweise bei Überschreitung einer Kabellänge von 15 m, von Vorteil, trotz grundsätzlicher Fähigkeit beider Kommunikationspartner zu einer Verbindung gemäß dem zweiten Protokoll auf das erste Protokoll zurückzugreifen. Die Bewertung kann einen Vergleich einer gemessenen Datenrate mit einem Schwellenwert umfassen, wobei beispielsweise eine Unterschreitung des Schwellenwerts als negatives Ergebnis der Bewertung aufzufassen ist. Eine derartige Bewertung der Signalübertragungsqualität kann somit ein zusätzliches Kriterium darstellen, um im Falle eines positiven Ergebnisses der genannten zweiten Prüfung tatsächlich eine Kommunikation mit der verbundenen weiteren Kommunikationseinrichtung gemäß dem zweiten Protokoll aufzubauen.

Es ist bevorzugt, dass der jeweilige elektrische Anschluss der Kommunikationseinrichtung (insbesondere jeder von mehreren - beispielsweise zwei - elektrischen Anschlüssen der Kommunikationseinrichtung) lediglich die zwei Energieversorgungskontakte und lediglich die zwei Signalkontakte aufweist. Dadurch ist es möglich, vierpolige Verbindungskabel zu verwenden, welche besonders leicht und kompakt sind. Zudem kann die Größe der Anschluss-Stecker und der Anschluss-Buchsen geringgehalten werden. Sowohl für beispielsweise das CAN-Protokoll als auch für beispielsweise das SPE-Protokoll reichen im Allgemeinen zwei Energieversorgungsleitungen und zwei Signalleitungen aus.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine Darstellung einer Bewegtbildkamera mit mehreren Objektiv-Stellmotoren.
- Fig. 2: zeigt eine Kommunikationseinrichtung eines der in Fig. 1 gezeigten Objektiv-Stellmotoren.
- Fig. 3: zeigt die Anschlüsse einer Kommunikationseinrichtung gemäß Fig. 2.
- Fig. 4: ist ein Flussdiagramm, das von einer Steuereinheit der in Fig. 2 gezeigten Kommunikationseinrichtung auszuführende Schritte darstellt.
- Fig. 5: ist ein Flussdiagramm, das eine alternative Abfolge von Schritten darstellt, die von der Steuereinheit der in Fig. 2 gezeigten Kommunikationseinrichtung auszuführen sind.

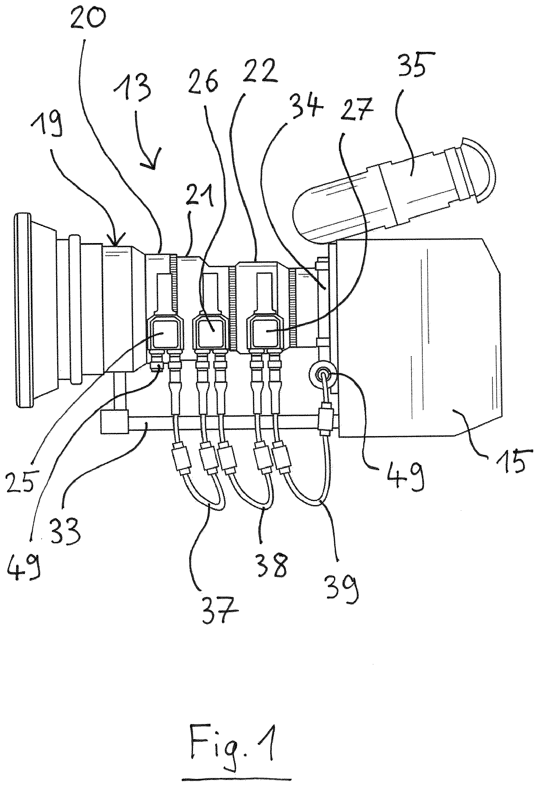

Fig. 1 zeigt eine Bewegtbildkamera 13 mit einem Kamerakörper 15, an welchem ein Wechselobjektiv 19 befestigt ist. Dieses Wechselobjektiv 19 weist drei Objektivringe 20, 21, 22 auf, mittels derer jeweilige Parameter der Bewegtbildkamera 13 eingestellt werden können. Beispielsweise kann der erste Objektivring 20 dazu vorgesehen sein, durch Drehungen die Fokuslage des Wechselobjektivs 19 anzupassen, während mittels des zweiten Objektivrings 21 beispielsweise die Brennweite einstellbar sein kann. Der dritte Objektivring 22 kann beispielsweise dazu vorgesehen sein, die Irisblendenöffnung anzupassen. Um die Objektivringe 20, 21, 22 verstellen zu können, sind jeweilige elektrische Objektiv-Stellmotoren 25, 26, 27 vorgesehen. Die Objektiv-Stellmotoren 25, 26, 27 bilden Kamerakomponenten in Form von Zubehörgeräten für die Bewegtbildkamera 13. Die Objektiv-Stellmotoren 25, 26, 27 sind über eine Haltestange 33 mechanisch mit dem Kamerakörper 15 verbunden. Das Wechselobjektiv 19 ist über einen Objektiv-Anschluss (englisch: lens mount) 34 mechanisch mit dem Kamerakörper 15 verbunden.

Um ein jeweiliges mittels des Wechselobjektivs 19 anvisiertes Bild und damit die korrekte Ausrichtung der Bewegtbildkamera 13 überprüfen zu können, ist an dem Kamerakörper 15 ferner ein Sucher 35 angeordnet. Durch die Ausbildung der Bewegtbildkamera 13 mit einem Wechselobjektiv 19 können auch andersartige Objektive und darauf abgestimmte Objektivring-Antriebseinheiten mit dem Kamerakörper 15 verbunden werden.

Der Stellmotor 25 des ersten Objektivrings 20 ist über ein erstes Verbindungskabel 37 signalmäßig mit dem Stellmotor 26 des zweiten Objektivrings 21 verbunden, während der Stellmotor 26 des zweiten Objektivrings 21 über ein zweites Verbindungskabel 38 signalmäßig mit dem Stellmotor 27 des dritten Objektivrings 22 verbunden ist. Weiterhin ist der Stellmotor 27 des dritten Objektivrings 22 über ein drittes Verbindungskabel 39 signalmäßig mit dem Objektiv-Anschluss 34 verbunden, der seinerseits an eine im Kamerakörper 15 untergebrachte, in Fig. 1 nicht sichtbare Basis-Steuereinheit der Bewegtbildkamera 13 angeschlossen ist. Dadurch ist ein serieller Bus gebildet. Die Verbindungskabel 37, 38, 39 sind vorzugsweise vierpolig und weisen eine Impedanz von wenigstens 80 Ohm, vorzugsweise von wenigstens 100 Ohm, auf.

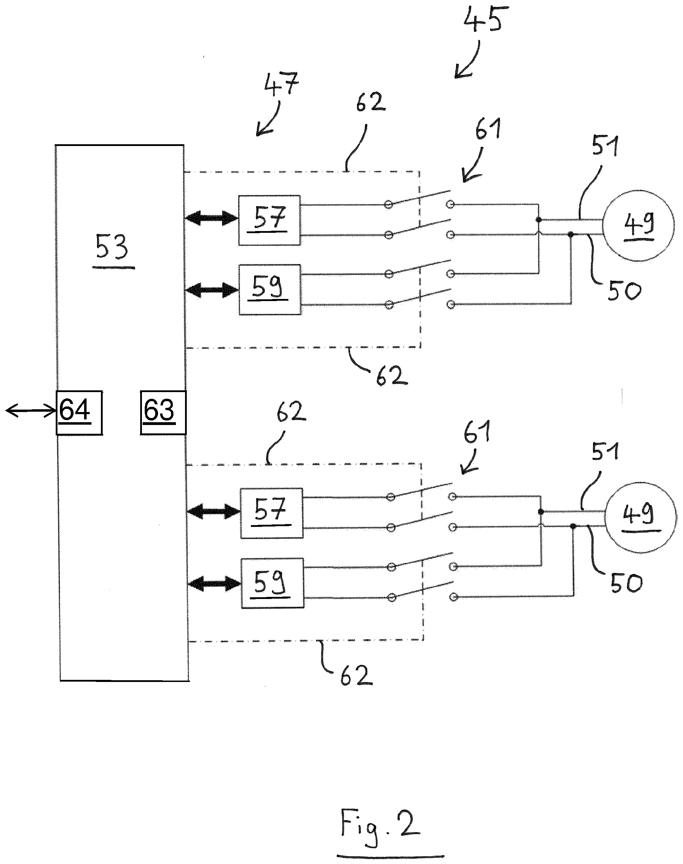

Über den seriellen Bus kann zwischen den Stellmotoren 25, 26, 27 und dem Objektiv-Anschluss 34 - und somit der Basis-Steuereinheit der Bewegtbildkamera 13- ein Austausch von Steuer- und/oder Statussignalen stattfinden. Hierfür sind die Stellmotoren 25, 26, 27 und die Basis-Steuereinheit mit jeweiligen Kommunikationseinrichtungen 45 ausgestattet, von welchen eine in vereinfachter Form in Fig. 2 gezeigt ist.

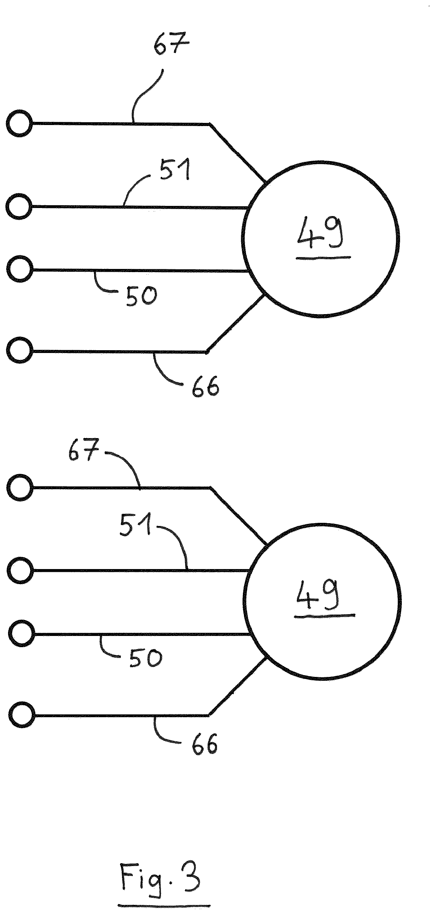

Jede der Kommunikationseinrichtungen 45 der Stellmotoren 25, 26, 27 umfasst eine elektronische Steuereinheit 47 und beispielsweise zwei elektrische Anschlüsse 49, wobei jeder der zwei elektrischen Anschlüsse 49 zwei Signalkontakte 50, 51 und zwei Energieversorgungskontakte 66, 67 (Fig. 3) aufweist.

Die Steuereinheit 47 umfasst einen Controller 53, der für jeden der zwei elektrischen Anschlüsse 49 einen ersten Transceiver - beispielsweise einen CAN-Transceiver 57 -, einen zweiten Transceiver - beispielsweise einen SPE-Transceiver 59 -, und eine Schalteinrichtung 61 umfasst. Mittels der Schalteinrichtungen 61 ist es möglich, wahlweise den CAN-Transceiver 57 oder den SPE-Transceiver 59 mit den zwei Signalkontakten 50, 51 des zugehörigen elektrischen Anschlusses 49 zu koppeln, um über diesen elektrischen Anschluss 49 Signale zu senden und/oder zu empfangen. Der Controller 53 steht über Steuerleitungen 62 mit der jeweiligen Schalteinrichtung 61 in Verbindung und ist dazu ausgebildet, die Kopplung des zugehörigen CAN-Transceivers 57 und des zugehörigen SPE-Transceivers 59 mit den zugehörigen Signalkontakten 50, 51 zu steuern. Die Kommunikationseinrichtung 45 kann grundsätzlich noch weitere Anordnungen aus Controller 53, CAN-Transceiver 57, SPE-Transceiver 59, Schalteinrichtung 61 und elektrischem Anschluss 49 aufweisen. Beispielsweise kann für jedes Paar von CAN-Transceiver 57 und SPE-Transceiver 59 ein eigener Controller vorgesehen sein. Insbesondere können die Schalteinrichtungen 61 auch dazu ausgebildet sein, die Energieversorgungskontakte 66, 67 (Fig. 3) umzuschalten. Die Kommunikationseinrichtung 45 kann auch lediglich einen einzigen elektrischen Anschluss 49 oder mehr als zwei elektrische Anschlüsse 49 umfassen (beispielsweise drei oder vier oder noch mehr).

Die Kommunikationseinrichtung 45 weist auch einen Signalumsetzer 63 auf, der in den Controller 53 integriert ist und dazu ausgebildet ist, wahlweise ein an einem der elektrischen Anschlüsse 49 empfangenes CAN-Signal in ein SPE-Signal umzuwandeln oder ein an einem der elektrischen Anschlüsse 49 empfangenes SPE-Signal in ein CAN-Signal umzuwandeln. Der Controller 53 ist dazu ausgebildet, den Signalumsetzer 63 zu einem Umwandeln eines an einem der zwei elektrischen Anschlüsse 49 empfangenen CAN-Signals in ein SPE-Signal anzusteuern, um das SPE-Signal an dem anderen der zwei elektrischen Anschlüsse 49 auszugeben. Alternativ oder zusätzlich ist der Controller 53 dazu ausgebildet, den Signalumsetzer 63 zu einem Umwandeln eines an einem der zwei elektrischen Anschlüsse 49 empfangenen SPE-Signals in ein CAN-Signal anzusteuern, um das CAN-Signal an dem anderen der zwei elektrischen Anschlüsse 49 auszugeben. Somit kann die Kommunikationseinrichtung 45 als Adapter zwischen einem CAN-basierten Gerät und einem SPE-basierten Gerät dienen.

Die Kommunikationseinrichtung 45 kann im Übrigen eine Schnittstelle 64 für eine Signalübertragung zwischen der jeweiligen Kommunikationseinrichtung 45 und einer Motorsteuerung des betreffenden Stellmotors 25, 26, 27 aufweisen. Die Steuereinheit 47 der Kommunikationseinrichtung 45 - insbesondere deren Controller 53 - kann bei Vorhandensein einer solchen Schnittstelle 64 dazu ausgebildet sein, eine Übertragung von Signalen zwischen den zwei elektrischen Anschlüssen 49 der Kommunikationseinrichtung 45 und/oder zwischen einem der zwei elektrischen Anschlüsse 49 und der Schnittstelle 64 zu steuern. Die Schnittstelle 64 kann elektrische Verbindungen und/oder elektrische Kontakte umfassen.

Fig. 3 zeigt ergänzend, dass jeder der zwei Anschlüsse 49 der Kommunikationseinrichtung 45 gemäß Fig. 2 zwei Signalkontakte 50, 51 und zwei Energieversorgungskontakte 66, 67 aufweist, die beispielsweise als Buchsenkontakte oder als Steckerkontakte für eine elektrische Steckverbindung mittels der Verbindungskabel 37, 38, 39 ausgebildet sein können.

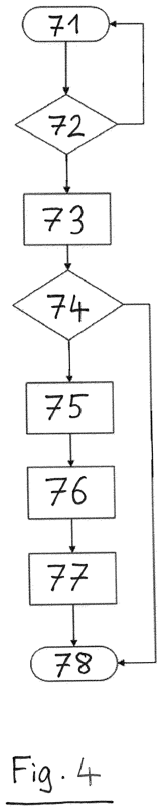

Nachfolgend wird unter Bezugnahme auf Fig. 4 ein Prozess beschrieben, der von der Steuereinheit 47 der Kommunikationseinrichtung 45 ausgeführt wird, wenn die Kommunikationseinrichtung 45 über einen der zwei elektrischen Anschlüsse 49 mit einer weiteren Kommunikationseinrichtung 45 verbunden wird.

Zunächst wird in einem Schritt 71 eine Verbindung mit einer weiteren Kommunikationseinrichtung 45 detektiert, beispielsweise mittels eines sogenannten "Hot Plug"-Verfahrens. Dann wird in einem Schritt 72 eine erste Prüfung durchgeführt, ob mit der weiteren Kommunikationseinrichtung 45 eine Kommunikation nach einem ersten Protokoll, beispielsweise CAN-Protokoll, möglich ist. Wenn dies nicht zutrifft, das heißt wenn das Ergebnis der ersten Prüfung negativ ist, erfolgt eine Rückkehr zum Schritt 71.

Wenn das Ergebnis der ersten Prüfung hingegen positiv ist, wird in einem Schritt 73 eine Kommunikation mit der weiteren Kommunikationseinrichtung 45 gemäß dem CAN-Protokoll aufgebaut. Danach wird in einem Schritt 74 eine zweite Prüfung durchgeführt, ob mit der weiteren Kommunikationseinrichtung 45 auch eine Kommunikation nach einem zweiten Protokoll, beispielsweise SPE-Protokoll, möglich ist. Wenn dies zutrifft, das heißt wenn das Ergebnis der zweiten Prüfung positiv ist, wird in einem Schritt 75 die Schalteinrichtung 61 des betreffenden elektrischen Anschlusses 49 dazu angesteuert, den SPE-Transceiver 59 mit den zwei Signalkontakten 50, 51 zu koppeln, um über diesen elektrischen Anschluss 49 Signale zu übertragen. Danach werden in einem (optionalen) Schritt 76 die weiteren Voraussetzungen für eine nachfolgende Kommunikation gemäß dem SPE-Protokoll ausgehandelt. Beispielsweise kann eine Master/Slave-Zuordnung zwischen den verbundenen Kommunikationseinrichtungen 45 ausgehandelt werden. In einem Schritt 77 wird eine Kommunikation mit der weiteren Kommunikationseinrichtung 45 gemäß dem SPE-Protokoll aufgebaut. In einem Schritt 78 erfolgt eine Signalübertragung gemäß der aufgebauten Kommunikation.

Wenn im Schritt 74 das Ergebnis der zweiten Prüfung negativ ist, wird direkt zu Schritt 78 gesprungen und es wird weiterhin gemäß dem CAN-Protokoll kommuniziert.

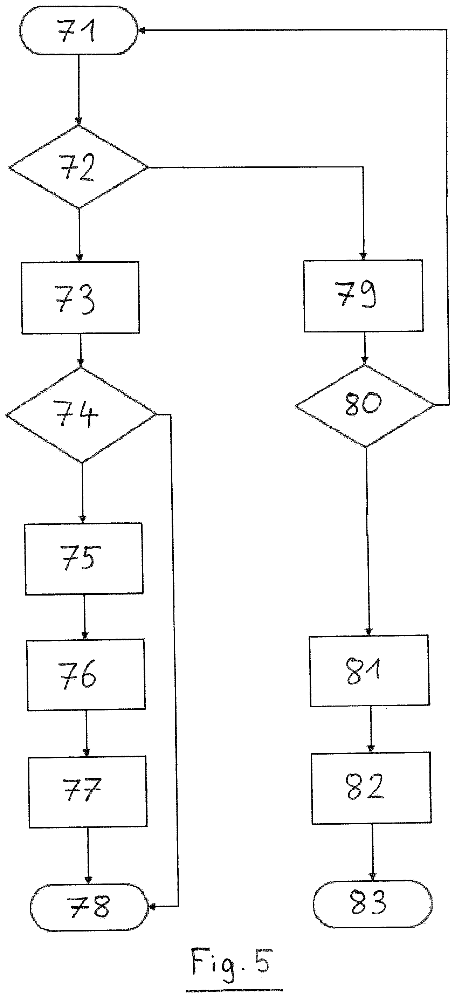

Fig. 5 zeigt einen alternativen Prozess, wobei der linke Teil des in Fig. 5 gezeigten Flussdiagramms der Fig. 4 entspricht. Der Unterschied zu Fig. 4 besteht darin, dass bei einem negativen Ergebnis der ersten Prüfung im Schritt 72 nicht zu Schritt 71 zurückgesprungen wird, sondern in einem Schritt 79 die Schalteinrichtung 61 des betreffenden elektrischen Anschlusses 49 dazu angesteuert wird, den SPE-Transceiver 59 mit den zwei Signalkontakten 50, 51 zu koppeln, um über den elektrischen Anschluss 49 Signale zu übertragen. Anschließend wird in einem Schritt 80 geprüft, ob eine Kommunikation gemäß dem SPE-Protokoll möglich ist. Wenn dies nicht der Fall ist, wird zu Schritt 71 zurückgesprungen. Wenn hingegen eine Kommunikation gemäß dem SPE-Protokoll möglich ist, wird in Schritten 81 bis 83, die den Schritten 76 bis 78 entsprechen, eine SPE-Kommunikation in Gang gesetzt.

Gemäß einer nicht dargestellten Ausführungsform wird nach dem Aufbauen einer Kommunikation mit der weiteren Kommunikationseinrichtung 45 gemäß dem SPE-Protokoll eine Bewertung der Signalübertragungsqualität durchgeführt und im Falle eines negativen Ergebnisses der Bewertung eine Kommunikation mit der weiteren Kommunikationseinrichtung 45 gemäß dem CAN-Protokoll anstelle des SPE-Protokolls aufgebaut.

Die Kommunikationseinrichtung 45 kann der Bewegtbildkamera 13 (Fig. 1) an sich, einem oder mehreren der Objektiv-Stellmotoren 25, 26, 27 (Fig. 1), einem nicht gezeigten Stellmotor für einen drehbaren Polarisationsfilter, einer motorisch verstellbaren Kamera-Halterung, einer übergeordneten Steuereinheit (z.B. Steuercomputer) eines Kamerasystems, einer Kamerastabilisierungseinrichtung, einer Bildstabilisierungseinrichtung, einer Filmset-Beleuchtungseinrichtung oder einer Fernsteuereinrichtung (wie beispielsweise einer Handbedieneinheit) zugeordnet sein. Die genannten Vorrichtungen bilden insofern Kamerakomponenten.

Die Erfindung ermöglicht die gemeinsame Nutzung von SPE-fähigen Kamerakomponenten und nicht SPE-fähigen CAN-basierten Kamerakomponenten in komplexen Kamerasystemen, wobei auch andere verschiedenartige Kommunikationsprotokolle möglich sind. Es ist hierbei nicht zwischen verschiedenen Anschlüssen zu wählen. Ebenso sind keine unterschiedlichen Kabel bereitzustellen und handzuhaben. Der Benutzer muss sich überhaupt nicht um eine Auswahl des Kommunikations-Protokolls kümmern. Vielmehr wird automatisch stets das passende Protokoll verwendet.

### Bezugszeichenliste:

- 13: Bewegtbildkamera
- 15: Kamerakörper
- 19: Wechselobjektiv
- 20: erster Objektivring
- 21: zweiter Objektivring
- 22: dritter Objektivring
- 25: Stellmotor
- 26: Stellmotor
- 27: Stellmotor
- 33: Haltestange
- 34: Objektiv-Anschluss
- 35: Sucher
- 37: erstes Verbindungskabel
- 38: zweites Verbindungskabel
- 39: drittes Verbindungskabel
- 45: Kommunikationseinrichtung
- 47: Steuereinheit
- 49: elektrischer Anschluss
- 50: Signalkontakt
- 51: Signalkontakt
- 53: Controller
- 57: CAN-Transceiver
- 59: SPE-Transceiver
- 61: Schalteinrichtung
- 62: Steuerleitung
- 63: Signalumsetzer
- 64: Schnittstelle
- 66: Energieversorgungskontakt
- 67: Energieversorgungskontakt
- 71-83: Verfahrensschritte

## Patentansprüche

1. Kamerakomponente, die durch eine Bewegtbildkamera (13) oder ein Zubehörgerät (25, 26, 27) für eine Bewegtbildkamera (13) gebildet ist,
mit einer Kommunikationseinrichtung (45) zum Übertragen von Steuer- und/oder Statussignalen der Kamerakomponente, wobei die Kommunikationseinrichtung (45) eine Steuereinheit (47) und wenigstens einen elektrischen Anschluss (49) umfasst, wobei der elektrische Anschluss (49) wenigstens zwei Energieversorgungskontakte (66, 67) und wenigstens zwei Signalkontakte (50, 51) aufweist,
wobei die Steuereinheit (47) dazu ausgebildet ist, die folgenden Schritte auszuführen, wenn die Kommunikationseinrichtung (45) über den elektrischen Anschluss (49) mit einer weiteren Kommunikationseinrichtung (45) einer weiteren Kamerakomponente verbunden wird:
- Durchführen (72) einer ersten Prüfung, ob mit der weiteren Kommunikationseinrichtung (45) eine Kommunikation gemäß einem ersten Protokoll möglich ist;
- danach Durchführen (74) einer zweiten Prüfung, ob mit der weiteren Kommunikationseinrichtung (45) auch eine Kommunikation gemäß einem zweiten Protokoll möglich ist, und
- im Falle eines positiven Ergebnisses der zweiten Prüfung Aufbauen (75, 76, 77) einer Kommunikation mit der weiteren Kommunikationseinrichtung (45) gemäß dem zweiten Protokoll.

2. Kamerakomponente nach Anspruch 1,
wobei die Steuereinheit (47) dazu ausgebildet ist, im Falle eines positiven Ergebnisses der ersten Prüfung zumindest temporär eine Kommunikation mit der weiteren Kommunikationseinrichtung gemäß dem ersten Protokoll aufzubauen (73).

3. Kamerakomponente nach Anspruch 1 oder 2,
wobei die Steuereinheit (47) dazu ausgebildet ist, im Falle eines negativen Ergebnisses der ersten Prüfung die erste Prüfung zu wiederholen.

4. Kamerakomponente nach Anspruch 1 oder 2,
wobei die Steuereinheit (47) dazu ausgebildet ist, im Falle eines negativen Ergebnisses der ersten Prüfung die zweite Prüfung durchzuführen (74).

5. Kamerakomponente nach einem der vorstehenden Ansprüche,
wobei das Aufbauen (75, 76, 77) einer Kommunikation mit der weiteren Kommunikationseinrichtung (45) gemäß dem zweiten Protokoll umfasst, dass die Kommunikationseinrichtung (45) mit der weiteren Kommunikationseinrichtung (45) eine Master/Slave-Zuordnung aushandelt (76).

6. Kamerakomponente nach einem der vorstehenden Ansprüche,
wobei das erste Protokoll ein Controller Area Network (CAN) Protokoll ist.

7. Kamerakomponente nach einem der vorstehenden Ansprüche,
wobei das zweite Protokoll ein Zeitstempel-übertragungsfähiges Netzwerkprotokoll, insbesondere ein Internet Protocol (IP) Protokoll ist.

8. Kamerakomponente nach einem der vorstehenden Ansprüche,
wobei das zweite Protokoll ein Single Pair Ethernet (SPE) Protokoll ist.

9. Kamerakomponente nach einem der vorstehenden Ansprüche,
wobei die Steuereinheit (47) der Kommunikationseinrichtung (45) wenigstens einen Controller (53), wenigstens einen dem ersten Protokoll entsprechenden ersten Transceiver (57), wenigstens einen dem zweiten Protokoll entsprechenden zweiten Transceiver (59) und wenigstens eine Schalteinrichtung (61) umfasst,
wobei die Schalteinrichtung (61) dazu ausgebildet ist, wahlweise den ersten Transceiver (57) oder den zweiten Transceiver (59) mit den zwei Signalkontakten (50, 51) des elektrischen Anschlusses (49) der Kommunikationseinrichtung (45) zu koppeln, um über den elektrischen Anschluss (49) Signale zu übertragen, und
wobei der Controller (53) dazu ausgebildet ist, die Kopplung des ersten Transceivers (57) und des zweiten Transceivers (59) mit den Signalkontakten (50, 51) der Kommunikationseinrichtung (45) zu steuern.

10. Kamerakomponente nach Anspruch 9,
wobei die Kommunikationseinrichtung (45) der Kamerakomponente zwei elektrische Anschlüsse (49) und eine Schnittstelle (64) für eine Signalübertragung zwischen der Kommunikationseinrichtung (45) und einer Komponenten-Funktionssteuereinheit der Kamerakomponente aufweist,
wobei der Controller (53) der Kommunikationseinrichtung (45) dazu ausgebildet ist, eine Übertragung von Signalen zwischen den zwei elektrischen Anschlüssen (49) der Kommunikationseinrichtung und/oder zwischen einem der zwei elektrischen Anschlüsse (49) und der Schnittstelle (64) der Kommunikationseinrichtung (45) zu steuern.

11. Kamerakomponente nach Anspruch 9 oder 10,
wobei die Steuereinheit (47) der Kommunikationseinrichtung (45) für jeden elektrischen Anschluss (49) einen ersten Transceiver (57) und einen zweiten Transceiver (59) aufweist.

12. Kamerakomponente nach einem der vorstehenden Ansprüche, wobei die Kommunikationseinrichtung (45) der Kamerakomponente wenigstens einen Signalumsetzer (63) aufweist, der dazu ausgebildet ist, wahlweise ein gemäß dem ersten Protokoll empfangenes Signal in ein Signal gemäß dem zweiten Protokoll umzuwandeln oder ein gemäß dem zweiten Protokoll empfangenes Signal in ein Signal gemäß dem ersten Protokoll umzuwandeln,
wobei die Steuereinheit (47) der Kommunikationseinrichtung (45) dazu ausgebildet ist, den Signalumsetzer (63) zu einem Umwandeln eines an einem elektrischen Anschluss (49) gemäß dem ersten Protokoll empfangenen Signals in ein Signal gemäß dem zweiten Protokoll anzusteuern, um das Signal gemäß dem zweiten Protokoll an einem anderen elektrischen Anschluss (49) der Kommunikationseinrichtung (45) auszugeben; und/oder den Signalumsetzer (63) zu einem Umwandeln eines an einem elektrischen Anschluss (49) gemäß dem zweiten Protokoll empfangenen Signals in ein Signal gemäß dem ersten Protokoll anzusteuern, um das Signal gemäß dem ersten Protokoll an einem anderen elektrischen Anschluss (49) der Kommunikationseinrichtung (45) auszugeben.

13. Kamerakomponente nach einem der vorstehenden Ansprüche,
wobei die Steuereinheit (47) dazu ausgebildet ist, nach dem Aufbauen einer Kommunikation mit der weiteren Kommunikationseinrichtung (45) gemäß dem zweiten Protokoll eine Bewertung der Signalübertragungsqualität durchzuführen und im Falle eines negativen Ergebnisses der Bewertung eine Kommunikation mit der weiteren Kommunikationseinrichtung (45) gemäß dem ersten Protokoll anstelle des zweiten Protokolls aufzubauen.

14. Kamerakomponente nach einem der vorstehenden Ansprüche,
wobei der jeweilige elektrische Anschluss (49) der Kommunikationseinrichtung (45) lediglich die zwei Energieversorgungskontakte (66, 67) und lediglich die zwei Signalkontakte (50, 51) aufweist.

15. Kamerakomponente nach einem der vorstehenden Ansprüche,
wobei die Kamerakomponente durch ein Zubehörgerät für eine Bewegtbildkamera (13) gebildet ist, das einen Stellmotor (25, 26, 27) für ein Kameraobjektiv (19), einen motorisierten optischen Filter, einen motorisch verstellbaren Kamerahalter, eine Kamerastabilisierungseinrichtung, eine Bildstabilisierungseinrichtung, eine Fernsteuereinrichtung oder eine Filmset-Beleuchtungseinrichtung umfasst.
